# EUROPEAN PATENT APPLICATION

(11) **EP 1 588 779 A1**
(43) Date of publication of application: **26.10.2005**
(21) Application number: 04009218.1
(22) Date of filing: 19.04.2004
(51) Int. Cl.: B05C 17/005, A61C 9/00

(54) **Dynamic mixer**

(71) Applicant: 3M ESPE AG, 82229 Seefeld (DE)
(72) Inventor: Wagner, Ingo, 82237 Woerthsee (DE); Pauser, Helmut, 86911 Diessen (DE)

(57) **Abstract**

The present invention relates to a dynamic mixer for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
wherein:
- the first flow path has a minimal cross-sectional area (Amc) of above 4,0 mm²;
- the second flow path has a minimal cross-sectional area (Amb) greater than the minimal cross-sectional area (Amc) of the first flow path.

## Description

### BACKGROUND OF THE INVENTION

### Technical Field

The present invention relates to a dynamic mixer for mixing at least two pastes, preferably to produce a dental substance. The present invention relates also to containers for the pastes to be mixed.

In particular, the invention relates to a dynamic mixer and to containers used to produce for example a dental substance, such as a dental impression material, from two pasty components, e.g. a catalyst paste and a base paste.

### Description of the Related Art

Dynamic mixers and containers used to produce a dental substance, such as a dental impression material, from two pasty components, e.g. a catalyst paste and a base paste, are well known in the art. For example, each of the following documents: US-6 523 992-B1, US-2003/0 123 323-A1, EP-0 971 787-B1, EP-1 149 627-A2, and US-6 244 740-B1, discloses a dynamic mixer for producing a dental impression material from a catalyst paste and a base paste, comprising:
- a mixing chamber;
- a mixing rotor in the mixing chamber;
- an inlet opening for the catalyst paste;
- an inlet opening for the base paste
- a first flow path extending from the inlet opening for the catalyst paste to the mixing chamber; and
- a second flow path extending from the inlet opening for the base paste to the mixing chamber.

Each of US-6 523 992-B1 and US-2003/0 123 323-A1 also discloses two containers containing the pastes to be mixed, the containers being designed for connection with the dynamic mixer, the first container containing the catalyst paste and the second container containing the base paste, the first container comprising:
- an outlet socket with an outlet opening for the catalyst paste;
- a third flow path extending through the outlet socket to the outlet opening;
the second container comprising:
- an outlet socket with an outlet opening for the base paste;
- a fourth flow path extending through the outlet socket to the outlet opening;
wherein:
- a first overall flow path extends from the first container to the mixing chamber, when the first container is connected to the mixer;
- a second overall flow path extends from the second container to the mixing chamber, when the second container is connected to the mixer.

The companies of Coltene Whaledent, Dentsply, GC, and Kettenbach, each offered a dynamic mixer (hereinafter identified as CWM1, DYM, GCM, and KEM1, respectively) similar to the above described dynamic mixer of US-6 523 992-B1, and a pair of first and second containers (hereinafter identified as CWC1, DYC, GCC, and KEC, respectively) fitting thereto and filled with catalyst paste and base paste, respectively. More precisely, Coltene Whaledent offered the impression material "President System 360 heavy body" filled in respective catalyst and base containers (CWC1), together with such dynamic mixer (CWM1) for mixing this impression material. Dentsply offered the impression materials "Aquasil Monophase FS DECA" and "Aquasil Heavy FS DECA", each filled in respective catalyst and base containers (DYC), together with such dynamic mixer (DYM) for mixing these impression materials. GC offered the impression materials "Exajet Heavy Body Normal Set" and "Exajet Heavy Body Fast Set", each filled in respective catalyst and base containers (GCC), together with such dynamic mixer (GCM) for mixing these impression materials. Kettenbach offered the impression materials "Kettosil", "Monopren Transfer", "Panasil binetics putty fast", "Panasil binetics putty soft", "Panasil tray fast", and "Panasil tray soft", each filled in respective catalyst and base containers (KEC), together with such dynamic mixer (KEM1) for mixing these impression materials.

Coltene Whaledent and Kettenbach each also offered a dynamic mixer (hereinafter identified as CWM2 and KEM2, respectively) similar to the above described dynamic mixer of US-2003/0 123 323-A1, and a pair of first and second containers (hereinafter identified as CWC2 and KEC, respectively) fitting thereto and filled with catalyst paste and base paste, respectively. More precisely, Coltene Whaledent offered the impression materials "Affinis System 360 mono body" and "Affinis System 360 heavy body" filled in respective catalyst and base containers (CWC2), together with such dynamic mixer (CWM2) for mixing these impression materials. Kettenbach offered the above mentioned impression materials "Kettosil", "Monopren Transfer", "Panasil binetics putty fast", "Panasil binetics putty soft", "Panasil tray fast", and "Panasil tray soft", each filled in respective catalyst and base containers (KEC), together with such dynamic mixer (KEM2) for mixing these impression materials.

The company of Kaniedenta offered a dynamic mixer (hereinafter identified as KAM) similar to the above described dynamic mixer of EP-0 971 787-B1, and a pair of first and second containers (hereinafter identified as KAC) fitting thereto and filled with catalyst paste and base paste, respectively. More precisely, Kaniedenta offered the impression materials "Symmetric Comfort", "Symmetric Quick Comfort", "Dynamic Comfort", and "Megasil Comfort", each filled in respective catalyst and base containers (KAC), together with such dynamic mixer (KAM) for mixing these impression materials.

The companies of Bisico and Heraeus Kulzer each offered a dynamic mixer (hereinafter identified as BIM and HKM, respectively) similar to the above described dynamic mixer of EP-1 149 627-A2, and a pair of first and second containers fitting (hereinafter identified as BIC and HKC2, respectively) thereto and filled with catalyst paste and base paste, respectively. More precisely, Bisico offered the impression materials "Compress mono" and "Compress heavy", each filled in respective catalyst and base containers (BIC), together with such dynamic mixer (BIM) for mixing these impression materials. Heraeus Kulzer offered the impression materials "Flexitime Magnum 360 Heavy Tray", "Flexitime Magnum 360 Heavy Monophase", "P2 Polyether Magnum 360 Heavy", and "P2 Polyether Magnum 360 Monophase", each filled in respective catalyst and base containers (HKC2), together with such dynamic mixer (HKM) for mixing these impression materials.

In the following, the above mentioned offered dynamic mixers and containers are collectively called "competitive dynamic mixers" and "competitive containers".

The company of 3M ESPE offered a dynamic mixer (hereinafter identified as 3MM) similar to the above described dynamic mixer of US-6 244 740-B1, and a pair of first and second containers (hereinafter identified as 3MC) fitting thereto and filled with catalyst paste and base paste, respectively. More precisely, 3M ESPE offered the impression materials "Position™ Penta™", "Position Penta™ Quick", "Impregum™ Penta™ Soft", "Impregum™ Penta™ H DuoSoft", "Impregum™ Penta™ L DuoSoft", "Impregum™ Penta™", "Permadyne™ Penta™ H", "Permadyne™ Penta™ L", "Dimension™ Penta™ H", "Dimension™ Penta™ L", "Dimension™ Penta™ H Quick", and "Ramitec™ Penta™", each filled in respective catalyst and base containers (3MC), together with such dynamic mixer (3MM) for mixing these impression materials.

All of the above mentioned offered dynamic mixers and containers are intended by the respective companies to be compatible with known motor-driven dispensing apparatuses, such as for example the motor-driven dispensing apparatus "PENTAMIX™ 2" that is available from 3M ESPE. This PENTAMIX™ 2 dispensing apparatus comprises a chamber for holding the first or catalyst container and the second or base container, two parallel motor-driven plungers associated respectively with the first and second chambers, and a motor for driving the dynamic mixer attached to the containers. These dynamic mixers each have an overall length of about 5 cm and an overall diameter of about 3 cm.

Each of the above mentioned impression materials requires a base-to-catalyst volume mixing ratio of 5: 1, i.e. five volume units of its respective base paste are to be mixed with one volume unit of the assigned catalyst paste, to achieve the best results.

One difficulty that the competitive dynamic mixers sometimes encounter after completion of the dispensing process is called "backward contamination". Backward contamination occurs if one paste flows in reverse direction through the flow path originally intended for the other paste, so that both pastes make contact in this flow path, upstream of the intended mixing point. This may result in a clogging due to setting or hardening, which if located in the outlet socket of the container, makes this container unusable for further delivery of the residual paste contained therein.

To decrease the risk of backward contamination, US-6 523 992-B1 and US-2003/0 123 323-A1 suggest baffle elements or redirection elements extending from the shaft of the mixing rotor in the region where the pastes enter the mixing chamber. The mixers CWM1, DYM, GCM, KEM1, CWM2, and KEM2 comprise such baffle elements or redirection elements. However, it was found that backward contamination still occurs. Further, the baffle and redirection elements complicate the structure and thus lead to increased manufacturing expense.

It would be desirable to overcome these and/or other disadvantages of known dynamic mixers.

### SUMMARY OF THE INVENTION

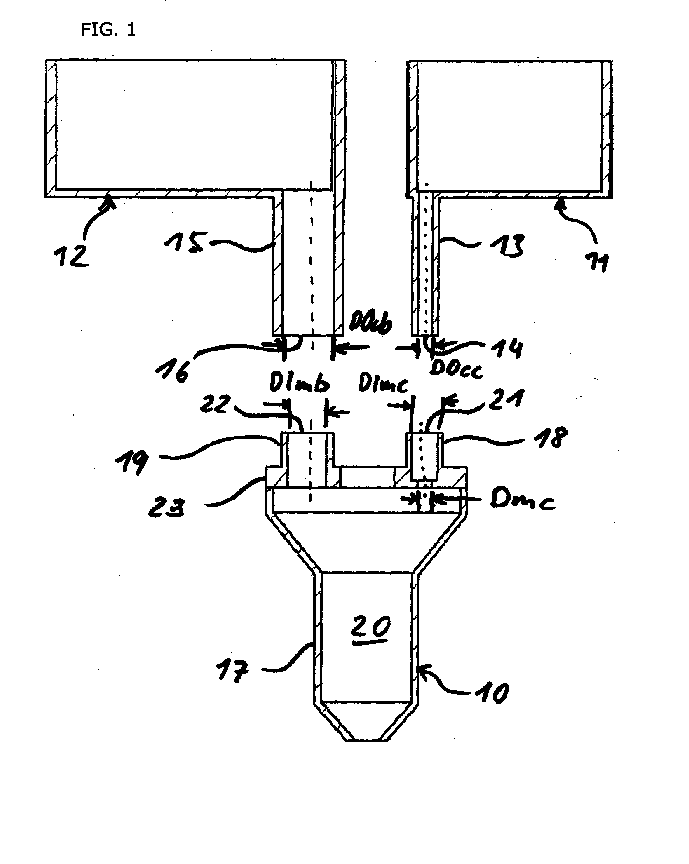

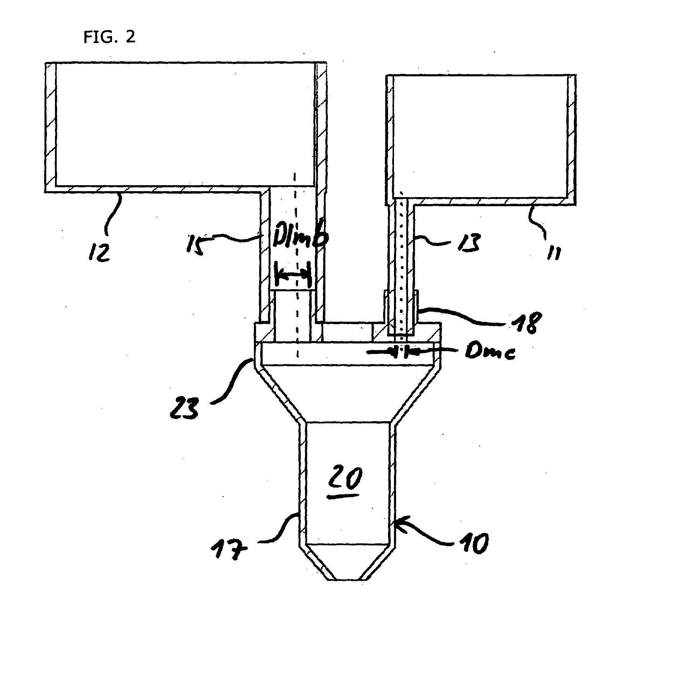

The inventors of the present invention examined the dynamic mixers mentioned above and their respective containers and identified and measured some particular dimensions as being characteristic. These dimensions will be explained with reference to FIGS. 1 and 2, which by way of example schematically show in cross section the general structure of a dynamic mixer 10 and an associated pair of a first or catalyst container 11 and a second or base container 12 fitting thereto. In FIG. 1, mixer 10 and containers 11 and 12 are separated, whereas FIG. 2 shows them assembled.

According to FIGS. 1 and 2, the catalyst container 11 comprises an outlet socket 13 with an outlet opening 14 for the catalyst paste, and similarly the base container 12 comprises an outlet socket 15 with an outlet opening 16 for the base paste. The mixer 10 comprises a tubular housing 17, a first connecting socket 18 for connection with outlet socket 13, and a second connecting socket 19 for connection with outlet socket 15. The housing 17 defines a mixing chamber 20. The first and second connecting sockets 18 and 19 have respective inlet openings 21 and 22, and they extend from a baseplate 23 attached to a back end of housing 17. The dynamic mixer 10 further comprises in mixing chamber 20 a mixing rotor, but this is not shown in FIGS. 1 and 2 for better clarity.

As can be seen in FIG. 1, a first flow path (represented as a dotted line) extends from inlet opening 21 to mixing chamber 20, and a second flow path (represented as a broken line) from inlet opening 22 to mixing chamber 20. Moreover, a third flow path (represented as a dotted line) extends through outlet socket 13 to outlet opening 14, and a fourth flow path (represented as a broken line) extends through outlet socket 15 to outlet opening 16. These flow paths can be different for different styles of dynamic mixers, so the flow paths shown in the Figures are intended to be representative of a sample set of flow paths.

The first flow path of FIG. 1 comprises a first segment and a second segment. The first segment begins at inlet opening 21, extends through connecting socket 18 and into baseplate 23, and has a circular inner cross-sectional profile of constant diameter DImc, where DImc is the inner diameter of inlet opening 21. The second segment continues the first segment, extends through baseplate 23 up to mixing chamber 20, and also has a circular inner cross-sectional profile of constant but smaller diameter Dmc, thus defining a narrow portion 24. Hence, the first flow path has a minimal cross-sectional area Amc that corresponds to the cross-sectional area of narrow portion 24 and results from Amc = Dmc²/4*pi.

The second flow path of FIG. 1 begins at inlet opening 22, extends through connecting socket 19 and baseplate 23 up to mixing chamber 20, and has a circular inner cross-sectional profile of constant diameter DImb, where DImb is the inner diameter of inlet opening 22. Thus, the second flow path has, in contrast to the first flow path, no narrow portion on its way to mixing chamber 20, so that it has a minimal cross-sectional area Amb that corresponds to the cross-sectional area of inlet opening 22 and results from Amb = DImb²/4*pi.

However, although not depicted in FIG. 1, the second flow path may also have a narrow portion like said narrow portion 24 in the first flow path. In this case, its minimal cross-sectional area Amb then accordingly will correspond to the cross-sectional area of this narrow portion.

The third flow path of FIG. 1 extends from the interior of first container 11 to outlet opening 14 and has a circular inner cross-sectional profile of constant diameter DOcc, where DOcc is the inner diameter of outlet opening 14. Thus, the third flow path has, like the second flow path, no narrow portion on its way to outlet opening 14 so that it has a minimal cross-sectional area Acc that corresponds to the cross-sectional area of outlet opening 14, and results from Acc = DOcc²/4*pi.

The fourth flow path of FIG. 1 similarly extends from the interior of second container 12 to outlet opening 16 and has a circular inner cross-sectional profile of constant diameter DOcb, where DOcb is the inner diameter of outlet opening 16. Thus, the fourth flow path has, like the second flow path, no narrow portion on its way to outlet opening 16 so that it has a minimal cross-sectional area Acb that corresponds to the cross-sectional area of outlet opening 1b and results from Acb = DOcb²/4*pi.

However, although not depicted in FIG. 1, each of the third and fourth flow paths may also have a narrow portion like said narrow portion 24 in the first flow path. In this case, the minimal cross-sectional areas Acc and Acb then accordingly will correspond to the cross-sectional area of the respective narrow portion.

As can be seen in FIG. 2, outlet socket 13 fits into connecting socket 18, and outlet socket 15 fits over connecting socket 19. As a result, the first and third flow paths and the second and fourth flow paths are respectively combined, so that a first overall flow path (represented as a dotted line) extends from the interior of first container 11 to mixing chamber 20, and a second overall flow path (represented as a broken line) extends from the interior of second container 12 to mixing chamber 20.

The first overall flow path of FIG. 2 comprises a first segment and a second segment. The first segment is constituted by outlet socket 13 that in this embodiment entirely fills the first segment of first flow path so that outlet opening 14 joins narrow portion 24, and it thus corresponds to the third flow path. The second segment continues the first segment and is constituted by narrow portion 24, and it thus corresponds to the second segment of first flow path. Now the narrowest part of the first overall flow path may be determined by comparing the minimal cross-sectional areas Amc and Acc and using lesser of the two areas. Hence, the first overall flow path has a minimal cross-sectional area Aoc that corresponds to said narrowest part and results from Aoc = min(Amc, Acc). As can be seen in FIG. 2, the diameter Dmc of narrow portion 24 equals the diameter DOcc of outlet opening 14 for the shown example, so that Aoc = Amc = Acc.

The second overall flow path of FIG. 2 also comprises a first segment and a second segment. Connecting socket 19 completely fits into outlet socket 15 but in this embodiment only partially fills it, and the first segment is constituted by that part of outlet socket 15 not covering or filled with connecting socket 19 (i.e. the part above inlet opening 22), and it thus corresponds to that part of the fourth flow path extending from the container's 12 interior up to inlet opening 22. The second segment continues the first segment and is constituted by connecting socket 19 and the adjoining part of baseplate 23, and it thus corresponds to the second flow path. Now the narrowest part of the second overall flow path may be determined by comparing the minimal cross-sectional areas Amb and Acb and using the lesser of the two areas. Hence, the second overall flow path has a minimal cross-sectional area Aob that corresponds to said narrowest part and results from Aob = min(Amb, Acb). As can be seen in FIG. 2, the diameter DImb of inlet opening 22 is smaller than the diameter DOcb of outlet opening 16 for the shown example, so that Aob = Amb.

In the following, the results of the inventors' examination of the offered mixers and containers and the results of their measurements and evaluations will be explained in more detail with reference to FIGS. 1 and 2.

The results of the measurements and evaluations on the mixers are summarized in the following TABLE 1 and explained thereafter.

**TABLE 1:**

| | **catalyst flow path** | | | **base flow path** | | |
|---|---|---|---|---|---|---|
| **Mixer** | **DImc [mm]** | **Dmc [mm]** | **Amc [mm**^{**2**}**]** | **DImb [mm]** | **Amb [mm**^{**2**}**]** | **Amb/Amc** |
| **CWM1** | 3,2 | 1,5 | 1,8 | 6,8 | 36 | 21 |
| **DYM** | 3,2 | 1,5 | 1,8 | 6,8 | 36 | 21 |
| **GCM** | 3,2 | 1,5 | 1,8 | 6,8 | 36 | 21 |
| **KEM1** | 3,2 | 2,0 | 3,1 | 6,8 | 36 | 12 |
| **CWM2** | 3,2 | semi-circ. | 4,0 | 6,9 | 37 | 9,3 |
| **KEM2** | 3,2 | semi-circ. | 4,0 | 6,9 | 37 | 9,3 |
| **KAM** | 3,2 | 1,2 | 1,1 | 7,0 | 38 | 34 |
| **BIM** | 3,2 | 1,2 | 1,1 | 6,9 | 37 | 33 |
| **HKM** | 3,2 | 1,2 | 1,1 | 6,9 | 37 | 33 |
| **3MM** | 3,2 | 1,6 | 2,0 | 6,3 | 31 | 16 |
| **MIN**. | | | | | | 9,3 |
| **MAX**. | | | 4,0 | | | |

wherein Amb/Amc is the ratio of the minimal cross-sectional areas of the second flow path and the first flow path and is calculated from Amb/Amc = DImb²/Dmc².

Each of the mixers CWM1, DYM, GCM, KEM1, CWM2, KEM2, KAM, BIM, HKM, and 3MM show a first or catalyst flow path for the catalyst paste and a second or base flow path for the base paste. Each catalyst flow path begins at inlet opening 21 with a circular inner cross-sectional profile with an inner diameter DImc = 3,2 mm, but comprises a narrow portion 24. Each base flow path begins at inlet opening 22 with a circular inner cross-sectional profile and comprises no narrow portion.

The mixers CWM1, DYM, and GCM are identical. Narrow portion 24 has a circular inner cross-sectional profile with an inner diameter Dmc = 1,5 mm. Thus catalyst flow path has a minimal cross-sectional area Amc = 1,8 mm². Inlet opening 22 has DImb = 6,8 mm. Thus base flow path has a minimal cross-sectional area Amb = 36 mm².

The mixer KEM1 has the same overall structure as CWM1, DYM, and GCM and differs in that its narrow portion 24 has Dmc = 2,0 mm, and thus Amc = 3,1 mm².

The mixers CWM2 and KEM2 are identical and have an overall structure similar to CWM1, DYM, GCM, and KEM1. They differ in that narrow portion 24 has a semicircular cross-sectional profile. Thus, catalyst flow path has a minimal cross-sectional area Amc = (DImc²/4*pi)/2 = 4,0 mm². They further differ in that inlet opening 22 has DImb = 6,9 mm, and thus Amb = 37 mm².

The mixer KAM is very similar to the mixer 10 of FIG. 1. Narrow portion 24 has a circular inner cross-sectional profile with an inner diameter Dmc = 1,2 mm, and thus Amc = 1,1 mm². Inlet opening 22 has DImb = 7,0 mm, and thus Amb = 38 mm².

The mixers BIM and HKM are identical and very similar to the mixer 10 of FIG. 1. Narrow portion 24 has a circular inner cross-sectional profile with an inner diameter Dmc = 1,2 mm, and thus Amc = 1,1 mm². Inlet opening 22 has DImb = 6,9 mm, and thus Amb = 37 mm².

The mixer 3MM is very similar to the mixer 10 of FIG. 1. Narrow portion 24 has a circular inner cross-sectional profile with an inner diameter Dmc = 1,6 mm, and thus Amc = 2,0 mm². Inlet opening 22 has DImb = 6,3 mm, and thus Amb = 31 mm².

The inventors compared these values and found that the offered mixers show a minimal cross-sectional area of the first flow path of Amc = 4,0 mm² and below and a ratio of the minimal cross-sectional areas of the second flow path and the first flow path of Amb/Amc = 9,3 and above.

The results of the measurements and evaluations on the container pairs are summarized in the following TABLE 2 and explained thereafter.

**TABLE 2:**

| | **catalyst flow path** | | | **base flow path** | |
|---|---|---|---|---|---|
| **Container pair** | **DOcc** **[mm]** | **Acc** **[mm**^{**2**}**]** | **DOcb** **[mm]** | **Acb** **[mm**^{**2**}**]** | **Acb/Acc** |
| **CWC1** | 1,6 | 2,0 | 8,6 | 58 | 29 |
| **DYC** | 1,5 | 1,8 | 8,5 | 57 | 32 |
| **GCC** | 1,5 | 1,8 | 8,5 | 57 | 32 |
| **KEC** | 1,5 | 1,8 | 8,5 | 57 | 32 |
| **CWC2** | 1,5 | 1,8 | 8,5 | 57 | 32 |
| **KAC** | 1,9 | 2,8 | 8,5 | 57 | 20 |
| **BIC** | 2,2 | 3,8 | 8,5 | 57 | 14,9 |
| **HKC1** | 2,0 | 3,1 | 8,5 | 57 | 18 |
| **HKC2** | 0,7 | 0,4 | 8,5 | 57 | 147 |
| **3MC** | 1,2 | 1,1 | 8,6 | 58 | 51 |
| **MIN.** | | | | | 14,9 |
| **MAX.** | | 3,8 | | | |

wherein Acb/Acc is the ratio of the minimal cross-sectional areas of the fourth flow path and the third flow path and is calculated from Acb/Acc = Dcb²/Dcc².

Each of the container pairs CWC1, DYC, GCC, KEC, CWC2, KAC, BIC, HKC1, HKC2, and 3MC is very similar to the pair of containers 11, 12 of FIG. 1 and comprises a first or catalyst container 11 for the catalyst paste and a second or base container 12 for the base paste. Each catalyst container 11 shows a third or catalyst flow path for the catalyst paste extending through outlet socket 13. Each catalyst flow path has a circular inner cross-sectional profile of constant diameter DOcc and comprises no narrow portion on its way through outlet socket 13, so that it has a minimal cross-sectional area Acc = DOcc²/4*pi. Each base container 12 shows a fourth or base flow path for the base paste extending through outlet socket 15. Each base flow path has a circular inner cross-sectional profile of constant diameter DOcb and comprises no narrow portion on its way through outlet socket 15, so that it has a minimal cross-sectional area Acb = DOcb²/4*pi. Moreover, each of these container pairs 11, 12 is assembled with its assigned mixer 10 as shown in FIG. 2, i.e. by fitting outlet socket 13 into connecting socket 18 and outlet socket 15 over connecting socket 19.

The container pair CWC1 has an outlet opening 14 with DOcc = 1,6 mm, and thus Acc = 2,0 mm². Outlet opening 16 has DOcb = 8,6 mm, and thus Acb = 58 mm².

The container pairs DYC, GCC, KEC, and CWC2 are identical and have the same overall structure as CWC1. They differ in that DOcc = 1,5 mm, and thus Acc = 1,8 mm², and in that DOcb = 8,5 mm, and thus Acb = 57 mm².

The container pair KAC has DOcc = 1,9 mm, and thus Acc = 2,8 mm², and it has DOcb = 8,5 mm, and thus Acb = 57 mm².

The container pair BIC has an overall structure similar to KAC and differs in that DOcc = 2,2 mm, and thus Acc = 3,8 mm².

The container pair HKC1 has DOcc = 2,0 mm, and thus Acc = 3,1 mm², and it has DOcb = 8,5 mm, and thus Acb = 57 mm².

The container pair HKC2 has the same overall structure as HKC1 and differs in that DOcc = 0,7 mm, and thus Acc = 0,4 mm².

The container pair 3MC has DOcc = 1,2 mm, and thus Acc = 1,1 mm², and it has DOcb = 8,6 mm, and thus Acb = 58 mm².

The inventors compared these values and found that the offered container pairs show a minimal cross-sectional area of the third flow path of Acc = 3,8 mm² and below and a ratio of the minimal cross-sectional areas of the fourth flow path and the third flow path of Acb/Acc = 14,9 and above.

The results of the evaluation on the assemblies of assigned mixers and container pairs are summarized in the following TABLE 3 and explained thereafter.

**TABLE 3:**

| **Mixer** | **Container pair** | **Aoc** **[mm**^{**2**}**]** | **Aob** **[mm**^{**2**}**]** | **Aob/Aoc** |
|---|---|---|---|---|
| **CWM1** | **CWC1** | 1,8 | 36 | 21 |
| **DYM** | **DYC** | 1,8 | 36 | 21 |
| **GCM** | **GCC** | 1,8 | 36 | 21 |
| **KEM1** | **KEC** | 1,8 | 36 | 21 |
| **CWM2** | **CWC2** | 1,8 | 37 | 21 |
| **KEM2** | **KEC** | 1,8 | 37 | 21 |
| **KAM** | **KAC** | 1,1 | 38 | 34 |
| **BIM** | **BIC** | 1,1 | 37 | 33 |
| **HKM** | **HKC1** | 1,1 | 37 | 33 |
| **HKM** | **HKC2** | 0,4 | 37 | 97 |
| **3MM** | **3MC** | 1,1 | 31 | 28 |
| **MIN.** | | | | 21 |
| **MAX.** | | 1,8 | | |

wherein the ratio Aob/Aoc is the ratio of the minimal cross-sectional areas of the second overall flow path and the first overall flow path and is calculated from Aob/Aoc = min(DImb², DOcb²)/min(Dmc², DOcc²).

The inventors compared these values and found that the assemblies of assigned mixers and container pairs show a minimal cross-sectional area of the first overall flow path of Aoc = 1,8 mm² and below and a ratio of the minimal cross-sectional areas of the second overall flow path and the first overall flow path of Aob/Aoc = 21 and above.

It is believed that improved performance in a dynamic mixer, and in systems of the type described herein, can be obtained by designing certain parts with certain geometric proportions. This is described generally and specifically in greater detail below.

In a 1st aspect, the present invention relates to a dynamic mixer for mixing at least a first paste and a second paste to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
wherein:
- the first flow path has a minimal cross-sectional area of above 4,0 mm²;
- the second flow path has a minimal cross-sectional area greater than the minimal cross-sectional area of the first flow path.

In a 2nd aspect, the present invention relates to a dynamic mixer for mixing at least a first paste and a second paste to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
wherein:
- the minimal cross-sectional areas of the second flow path and the first flow path are in the ratio of above 1:1 and below 9,3:1.

In a 3rd aspect, the present invention relates to a combination of a first container for containing a first paste and a second container for containing a second paste to be mixed with the first paste, the first container comprising:
- an outlet socket with an outlet opening for the first paste;
- a third flow path extending through the outlet socket to the outlet opening;
the second container comprising:
- an outlet socket with an outlet opening for the second paste;
- a fourth flow path extending through the outlet socket to the outlet opening;
the containers being designed for connection with a dynamic mixer for mixing at least the first and second pastes to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
wherein:
- the third flow path has a minimal cross-sectional area of above 3,8 mm²;
- the fourth flow path has a minimal cross-sectional area greater than the minimal cross-sectional area of the third flow path.

In a 4th aspect, the present invention relates to a combination of a first container for containing a first paste and a second container for containing a second paste to be mixed with the first paste, the first container comprising:
- an outlet socket with an outlet opening for the first paste;
- a third flow path extending through the outlet socket to the outlet opening;
the second container comprising:
- an outlet socket with an outlet opening for the second paste;
- a fourth flow path extending through the outlet socket to the outlet opening;
the containers being designed for connection with a dynamic mixer for mixing the first and second pastes to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
wherein:
- the minimal cross-sectional areas of the fourth flow path and the third flow path are in the ratio of above 1:1 and below 14,9:1.

In a 5th aspect, the present invention relates to a dynamic mixer for mixing at least a first paste and a second paste to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the mixer being designed for connection with a first container containing the first paste and a second container containing the second paste, the first container comprising:
- an outlet socket with an outlet opening for the first paste;
- a third flow path extending through the outlet socket to the outlet opening;
the second container comprising:
- an outlet socket with an outlet opening for the second paste;
- a fourth flow path extending through the outlet socket to the outlet opening;
wherein:
- a first overall flow path extends from the first container to the mixing chamber, when the first container is connected to the mixer;
- a second overall flow path extends from the second container to the mixing chamber, when the second container is connected to the mixer;
- the first overall flow path has a minimal cross-sectional area of above 1,8 mm²;
- the second overall flow path has a minimal cross-sectional area greater than the minimal cross-sectional area of the first overall flow path.

In a 6th aspect, the present invention relates to a dynamic mixer for mixing at least a first paste and a second paste to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the mixer being designed for connection with a first container containing the first paste and a second container containing the second paste, the first container comprising:
- an outlet socket with an outlet opening for the first paste;
- a third flow path extending through the outlet socket to the outlet opening;
the second container comprising:
- an outlet socket with an outlet opening for the second paste;
- a fourth flow path extending through the outlet socket to the outlet opening;
wherein:
- a first overall flow path extends from the first container to the mixing chamber, when the first container is connected to the mixer;
- a second overall flow path extends from the second container to the mixing chamber, when the second container is connected to the mixer;
- the minimal cross-sectional areas of the second overall flow path and the first overall flow path are in the ratio of above 1:1 and below 20,6:1.

In a 7th aspect, the present invention relates to a container for containing a first paste to be mixed with a second paste, the container comprising:
- an outlet socket with an outlet opening for the first paste;
- a third flow path extending through the outlet socket to the outlet opening;
the container being designed for connection with a dynamic mixer for mixing the first and second pastes to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the mixer being designed for connection with a second container containing the second paste, the second container comprising:
- an outlet socket with an outlet opening for the second paste;
- a fourth flow path extending through the outlet socket to the outlet opening;
wherein:
- a first overall flow path extends from the first container to the mixing chamber, when the first container is connected to the mixer;
- a second overall flow path extends from the second container to the mixing chamber, when the second container is connected to the mixer;
- the first overall flow path has a minimal cross-sectional area of above 1,8 mm²;
- the second overall flow path has a minimal cross-sectional area greater than the minimal cross-sectional area of the first overall flow path.

In a 8th aspect, the present invention relates to a container for containing a first paste to be mixed with a second paste, the container comprising:
- an outlet socket with an outlet opening for the first paste;
- a third flow path extending through the outlet socket to the outlet opening;
the container being designed for connection with a dynamic mixer for mixing the first and second pastes to produce a dental substance, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the mixer being designed for connection with a second container containing the second paste, the second container comprising:
- an outlet socket with an outlet opening for the second paste;
- a fourth flow path extending through the outlet socket to the outlet opening;
wherein:
- a first overall flow path extends from the first container to the mixing chamber, when the first container is connected to the mixer;
- a second overall flow path extends from the second container to the mixing chamber, when the second container is connected to the mixer;
- the minimal cross-sectional areas of the second overall flow path and the first overall flow path are in the ratio of above 1:1 and below 20,6:1.

In a 9th aspect, the present invention relates to a combination of a dynamic mixer, a first container for containing a first paste, and a second container for containing a second paste to be mixed with the first paste, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the first container comprising:
- an outlet socket with an outlet opening for the first paste;
- a third flow path extending through the outlet socket to the outlet opening, the outlet socket being connected with the mixer so as to form a first overall flow path that extends from the first container to the mixing chamber;
the second container comprising:
- an outlet socket with an outlet opening for the second paste;
- a fourth flow path extending through the outlet socket to the outlet opening, the outlet socket being connected with the mixer so as to form a second overall flow path that extends from the second container to the mixing chamber;
wherein:
- the first overall flow path has a minimal cross-sectional area of above 1,8 mm²;
- the second overall flow path has a minimal cross-sectional area greater than the minimal cross-sectional area of the first overall flow path.

In a 10th aspect, the present invention relates to a combination of a dynamic mixer, a first container for containing a first paste, and a second container for containing a second paste to be mixed with the first paste, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the first container comprising:
- an outlet socket with an outlet opening for the first paste;
- a third flow path extending through the outlet socket to the outlet opening, the outlet socket being connected with the mixer so as to form a first overall flow path that extends from the first container to the mixing chamber;
the second container comprising:
- an outlet socket with an outlet opening for the second paste;
- a fourth flow path extending through the outlet socket to the outlet opening, the outlet socket being connected with the mixer so as to form a second overall flow path that extends from the second container to the mixing chamber;
wherein:
- the minimal cross-sectional areas of the second overall flow path and the first overall flow path are in the ratio of above 1:1 and below 20,6:1.

In a 11th aspect, the present invention relates to a kit comprising at least one dynamic mixer, at least one first container containing a first paste, and at least one second container containing a second paste to be mixed with the first paste, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the first container comprising:
- an outlet socket with an outlet opening for the first paste;
- a third flow path extending through the outlet socket to the outlet opening, the outlet socket being connected with the mixer so as to form a first overall flow path that extends from the first container to the mixing chamber;
the second container comprising:
- an outlet socket with an outlet opening for the second paste;
- a fourth flow path extending through the outlet socket to the outlet opening, the outlet socket being connected with the mixer so as to form a second overall flow path that extends from the second container to the mixing chamber;
wherein:
- the first overall flow path has a minimal cross-sectional area of above 1,8 mm²;
- the second overall flow path has a minimal cross-sectional area greater than the minimal cross-sectional area of the first overall flow path.

In a 12th aspect, the present invention relates to a kit comprising at least one dynamic mixer, at least one first container containing a first paste, and at least one second container containing a second paste to be mixed with the first paste, the mixer comprising:
- a mixing chamber;
- an inlet opening for the first paste;
- an inlet opening for the second paste;
- a first flow path extending from the inlet opening for the first paste to the mixing chamber;
- a second flow path extending from the inlet opening for the second paste to the mixing chamber;
the first container comprising:
- an outlet socket with an outlet opening for the first paste;
- a third flow path extending through the outlet socket to the outlet opening, the outlet socket being connected with the mixer so as to form a first overall flow path that extends from the first container to the mixing chamber;
the second container comprising:
- an outlet socket with an outlet opening for the second paste;
- a fourth flow path extending through the outlet socket to the outlet opening, the outlet socket being connected with the mixer so as to form a second overall flow path that extends from the second container to the mixing chamber;
wherein:
- the minimal cross-sectional areas of the second overall flow path and the first overall flow path are in the ratio of above 1:1 and below 20,6:1.

The inventors surprisingly found that with the dynamic mixers, combinations, containers and kits according to the invention, the flow resistance for the first paste during dispensing, can be substantially reduced as compared with the offered mixers and containers, without increasing the risk of backward contamination. Moreover, the inventors surprisingly found that the desired volume mixing ratio of the pastes to be mixed, e.g. the above mentioned base-to-catalyst volume mixing ratio of 5: 1, can be maintained when using for example the PENTAMIX™ 2 dispensing apparatus.

The present invention provides the advantage that due to the reduced flow resistance it is now possible to use pastes with a much higher viscosity and/or to dispense the usual pastes at a much higher speed with the same dispensing device, as e.g. the PENTAMIX™ 2 dispensing apparatus.

The present invention provides the further advantage that no baffle or redirection elements as suggested by US-6 523 992-B1 and US-2003/0 123 323-A1 are needed. However, the present invention also covers a mixer comprising such elements.

The pastes to be mixed and the mixed dental substance may have a viscosity in the range from 0,5 mPas to 50 MPas, specifically from 1 mPas to 10 MPas. They may be highly viscous materials, i.e. materials with a viscosity determined by consistency testing in accordance with DIN 4823 class 0 to 3, which are measured with a diameter of less than 80 mm.

The invention is not restricted to mixing only two pastes, but covers also the mixing of three or more pastes.

It is possible that the first flow path has a minimal cross-sectional area of about 4,0 mm² or above, specifically about 4,1 mm² or above, more specifically about 4,2 mm² or above, more specifically about 4,3 mm² or above.

It is possible that the minimal cross-sectional areas of the second and first flow paths are in the ratio of about 9,3:1 or below, specifically about 9,2:1 or below, more specifically about 9,1:1 or below, more specifically about 9:1 or below, more specifically about 8:1 or below, more specifically about 7,5:1 or below, more specifically about 7:1 or below, more specifically about 5:1 or below, more specifically about 4,6:1 or below, more specifically about 4,5:1 or below, more specifically about 4,4:1 or below.

It is possible that the minimal cross-sectional areas of the second and first flow paths are in the ratio of above 1:1, specifically 1,1:1 or above, more specifically 1,2:1 or above, more specifically 1,5:1 or above, more specifically 2:1 or above, more specifically 3:1 or above, more specifically 4:1 or above, more specifically 5:1 or above, more specifically 6: 1 or above.

It is possible that the first overall flow path has a minimal cross-sectional area of above 1,8 mm², specifically about 1,9 mm² or above, more specifically about 2,0 mm² or above, more specifically about 3,0 mm² or above, more specifically about 4,0 mm² or above, more specifically about 5,0 mm² or above, more specifically about 6,0 mm² or above, more specifically about 6,2 mm² or above, more specifically about 6,4 mm² or above, more specifically about 7,0 mm² or above.

It is possible that the minimal cross-sectional areas of the second and first overall flow paths are in the ratio of about 20,6:1 or below, specifically about 20,3:1 or below, more specifically about 20,0:1 or below, more specifically about 19:1 or below, more specifically about 18:1 or below, more specifically about 16:1 or below, more specifically about 13:1 or below, more specifically about 10,6:1 or below, more specifically about 10,4:1 or below, more specifically about 10,2:1 or below, more specifically about 10:1 or below.

It is possible that the minimal cross-sectional areas of the second and first overall flow paths are in the ratio of above 1:1, specifically 2:1 or above, more specifically 3:1 or above, more specifically 4: 1 or above, more specifically 6: 1 or above, more specifically 8:1 or above, more specifically 10:1 or above, more specifically 12:1 or above, more specifically 14:1 or above, more specifically 16:1 or above.

Each flow path may have any cross-sectional profile. For example, the cross-sectional profile may be circular or semicircular or elliptic or rectangular or trapezoidal, and it may be constant in size and/or shape or may vary in size and/or shape along its length.

Moreover, each flow path may have any course, i.e. shape in longitudinal or flow direction. For example, the course may be straight or curved or bent or folded or forked, or may comprise one or more segments of such or any other longitudinal shape.

A delay segment, such as a delay chamber or a delay channel, may be part of any of the flow paths or may be connected to any of the flow paths. Such delay segment may provide a delay of one paste with respect to another paste during the initial filling of the empty mixing chamber. For example, a delay chamber and/or a delay channel may continue the second or base flow path so that the base paste has to flow a longer way and enters the mixing chamber later than in the case of no delay chamber or channel. This aids in adjusting the time span between the entry of the catalyst paste to the mixing chamber and the entry of the base paste to the mixing chamber, as desired, to achieve a good mixing quality.

Further preferred features and embodiments of the invention are described in the claims.

It is possible that the dynamic mixers according to the present invention are used for mixing at least a first paste and a second paste to produce a dental substance at a mixing ratio of 1:10 or above and 1:2 or below.

It is possible that in the dynamic mixers or containers or combinations according to the present invention, the minimal cross-sectional area of the first overall flow path is located in the first flow path or in the third flow path.

It is possible that the combinations or kits according to the present invention further comprise a motor-driven dispensing apparatus for feeding the pastes out of the containers to the mixer and driving the mixer.

It is possible that in the containers or combinations according to the present invention, the container for containing a first paste contains the first paste, i.e. is filled with the first paste.

It is possible that in the combinations according to the present invention, the container for containing a second paste contains the second paste, i.e. is filled with the second paste.

It is possible that the container or combinations according to the present invention, further comprise at least one dynamic mixer according to one of the preceding claims.

It is possible that a package contains two or more, specifically 20 or more, more specifically 50 or more, dynamic mixer according to the present invention.

### BRIEF DESCRIPTION OF THE DRAWINGS

Various embodiments of the invention are described in more detail below with reference to the attached drawings, which are by way of example only.
FIGS. 1+2 are schematic views in longitudinal section of a dynamic mixer and an associated pair of containers;
FIG. 3 is a perspective cutaway view of a dynamic mixer in a particular embodiment showing a mixing rotor;
FIG. 4 is a view similar to FIG. 3, but with the mixing rotor removed;
FIG. 5 is another perspective cutaway view of the dynamic mixer of FIG. 3, with a part removed along line V-V in FIG. 4; and
FIG. 6 is a perspective view of the part removed along line V-V in FIG. 4.

### DETAILED DESCRIPTION OF VARIOUS EMBODIMENTS

FIGS. 1 and 2 have already been described above in the chapter "SUMMARY OF THE INVENTION", so reference is made thereto to avoid repetition.

However, FIGS. 1 and 2 not only show schematically the general structure of the above discussed mixers and containers, but also show a dynamic mixer 10 in a first embodiment and an associated pair of containers 11, 12 in a first embodiment. These first embodiments of mixer 10 and containers 11, 12 according to the present invention are distinctive from the mixers and containers discussed above in the following dimensions of catalyst and base inlet openings 21, 22, narrow portion 24, catalyst and base outlet openings 14, 16, and first to fourth flow paths:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 45 | 2,8 | 6,2 | 9,2 | 66 |

Accordingly, in the present invention the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 7,4 | 11 | 6,2 | 45 | 7,4 |

In a first alternative, the dimensions of catalyst and base inlet openings 21, 22, narrow portion 24, catalyst and base outlet openings 14, 16, and first to fourth flow paths are as follows:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 45 | 1,5 | 1,8 | 9,2 | 66 |

Accordingly, the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 7,4 | 38 | 1,8 | 45 | 26 |

In a second alternative, the dimensions of catalyst and base inlet openings 21, 22, narrow portion 24, catalyst and base outlet openings 14, 16, and first to fourth flow paths are as follows:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 45 | 1,2 | 1,1 | 9,2 | 66 |

Accordingly, the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 7,4 | 59 | 1,1 | 45 | 40 |

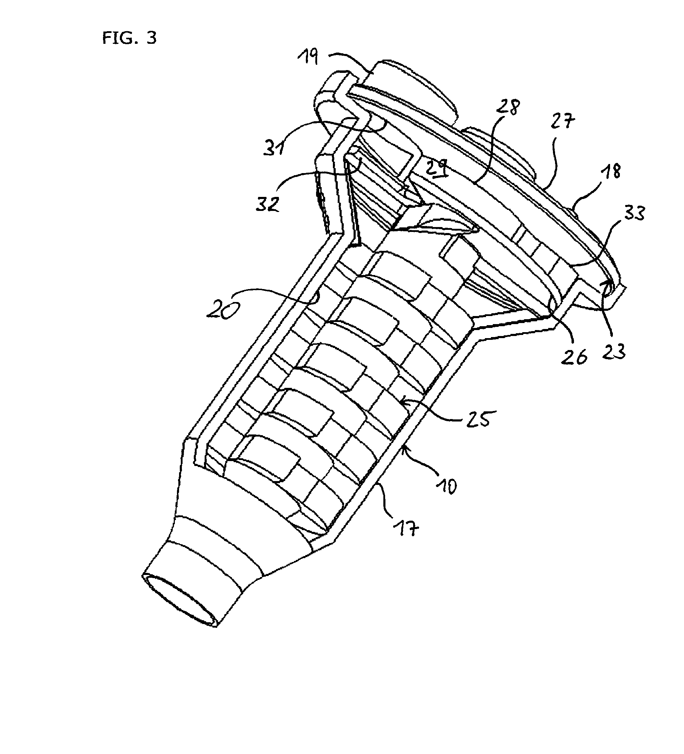

FIGS. 3 to 6 show a dynamic mixer 10 in a second embodiment that cooperates with the pair of containers 11, 12 of FIGS. 1 and 2.

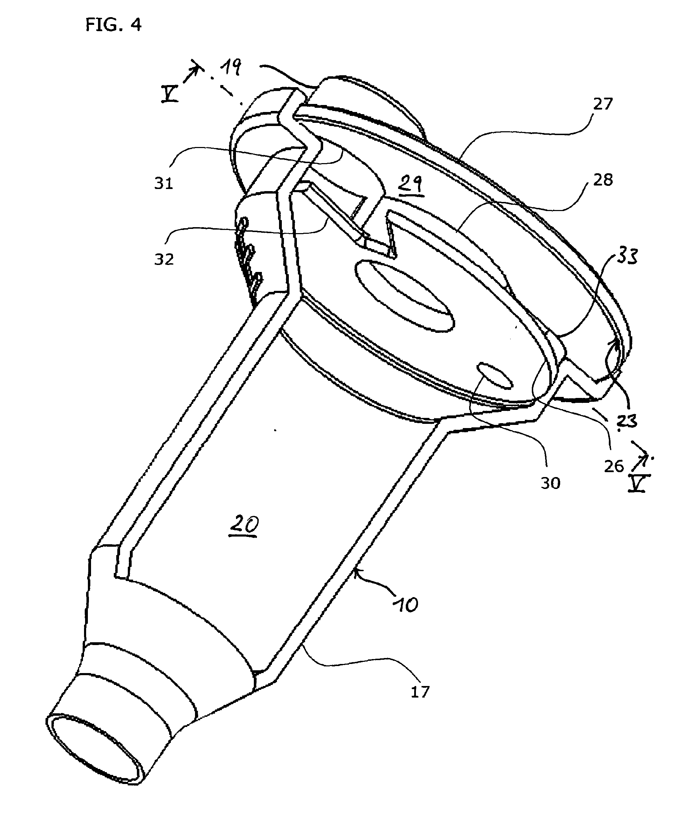

FIG. 3 shows mixer 10 including a mixing rotor 25 rotatably mounted in housing 17, whereas FIG. 4 shows mixer 10 without mixing rotor 25 for better clarity.

As can be seen in FIGS. 3 and 4, the general structure of mixer 10 is very similar to that of the mixer 10 of FIGS. 1 and 2, and differs mainly in the layout of baseplate 23 as explained below.

Baseplate 23 comprises a front disk 26, a back disk 27, and a distance piece 28 connecting disks 26, 27 so that a delay chamber 29 is defined between them. Catalyst and base connecting sockets 18, 19 extend from back disk 27 and open into mixing chamber 20 at hole 30 and into delay chamber 29 at hole 31 respectively.

Similar to the mixer 10 of FIG. 1, the first flow path begins at inlet opening 21, and extends through connecting socket 18 and baseplate 23, more precisely through back disk 27, distance piece 28 and front disk 26, up to mixing chamber 20, and it has a like narrow portion (although not shown in FIG. 3 to 6).

Similar to the mixer 10 of FIG. 1, the second flow path begins at inlet opening 22, and extends through connecting socket 19 and baseplate 23 up to mixing chamber 20. More precisely, since front disk 26 has a hole 32, the second flow path leaves back disk 27 at hole 31 to enter the delay chamber and leaves the delay chamber at hole 32.

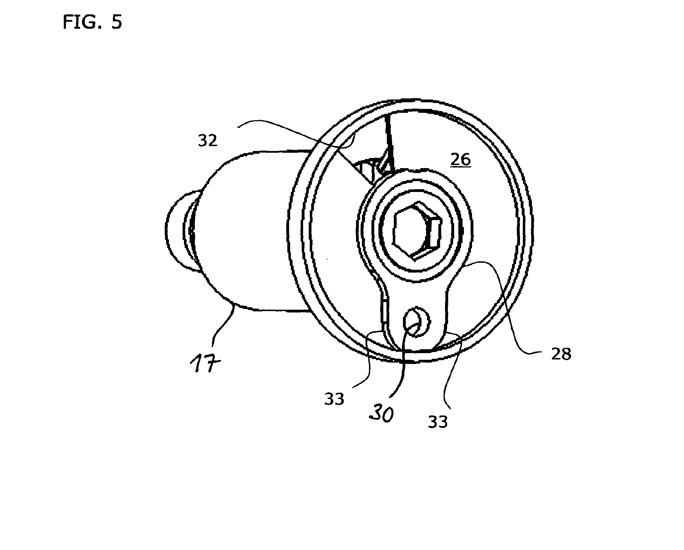

As can be seen in FIGS. 4 and 5, hole 31 has an approximately trapezoidal shape, the area of which is Atrz = (a+b)*h/2, wherein: a and b are the long and the short parallel sides of the trapezoid, and h is the height of the trapezoid. In this second embodiment of mixer 10, hole 31 has the following dimensions: a = 6,3 mm, b = 3,2 mm and h = 5,6 mm, resulting in Atrz = 27 mm², and the assembly of this second embodiment of mixer 10 and the first embodiment of containers 11, 12 is distinctive from conventional mixers and containers in the following dimensions of catalyst and base inlet openings 21, 22, narrow portion 24, hole 31, catalyst and base outlet openings 14, 16, and first to fourth flow paths:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 27 | 2,8 | 6,2 | 9,2 | 66 |

Accordingly, the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 4,3 | 11 | 6,2 | 27 | 4,3 |

In a first alternative, the dimensions of catalyst and base inlet openings 21, 22, narrow portion 24, hole 31, catalyst and base outlet openings 14, 16, and first to fourth flow paths are as follows:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 27 | 1,5 | 1,8 | 9,2 | 66 |

Accordingly, the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 4,3 | 38 | 1,8 | 27 | 15 |

In a second alternative, the dimensions of catalyst and base inlet openings 21, 22, narrow portion 24, hole 31, catalyst and base outlet openings 14, 16, and first to fourth flow paths are as follows:

| **DImc** **[mm]** | **Dmc** **[mm]** | **Amc** **[mm**^{**2**}**]** | **DImb** **[mm]** | **Amb** **[mm**^{**2**}**]** | **DOcc** **[mm]** | **Acc** **[mm**^{**2**}**]** | **DOcb** **[mm]** | **Acb** **[mm**^{**2**}**]** |
|---|---|---|---|---|---|---|---|---|
| 5,0 | 2,8 | 6,2 | 7,6 | 27 | 1,2 | 1,1 | 9,2 | 66 |

Accordingly, the following dimensions of first and second overall flow paths, and ratios apply:

| **Amb/Amc** | **Acb/Acc** | **Aoc** **[mm**^{**2**}**]** | **Aob** **[mm**^{**2**}**]** | **Aob/Aoc** |
|---|---|---|---|---|
| 4,3 | 59 | 1,1 | 27 | 24 |

In the following, the function of delay chamber will be explained. When pressed out of base container 12, the base paste flows through base connecting socket 19 and hole 31 into the delay chamber and initially fills it up by flowing in clockwise and anti-clockwise directions, as shown by two arrows in FIG. 5, around the longitudinal axis of mixer 10 until it is stopped by endwalls 33 on distance piece 28. Then, the base paste flows further through hole 32 into mixing chamber 20. Thus, the base paste enters the mixing chamber later than in the case where there is no delay chamber, as for example in mixer of FIG. 1, where the base paste immediately flows from connecting socket 19 into mixing chamber 20.

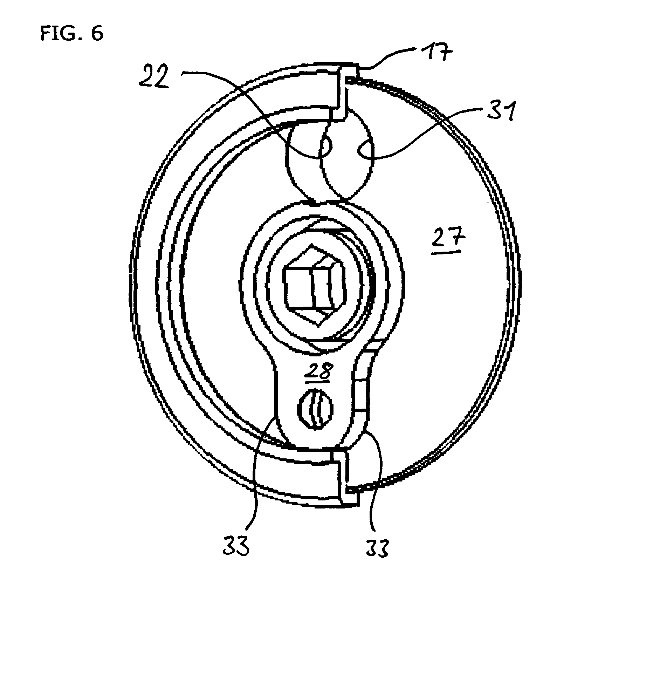

In the second embodiment of mixer 10, hole 32 is angularly displaced to hole 31 about the longitudinal axis of mixer 10 (cf. also FIGS. 5 and 6). It is also possible that it is angularly displaced more or less, and e.g. overlaps in part or entirely with hole 31 or lies adjacent one end wall 33. Further, hole 31 has here a trapezoidal shape, but it also may have any shape, as for example a circular shape. Further, two or more holes 32 may be provided in front disk 26.

The present invention has now been described with reference to several embodiments thereof. It will be apparent to those skilled in the art that many changes can be made in the embodiments described without departing from the scope of the present invention. Thus the scope of the present invention should not be limited to the structures described in this application, but only by structures described by the language of the claims and the equivalents of those structures.

### LIST OF REFERENCE SIGNS

- 10: Dynamic mixer
- 11: Catalyst container
- 12: Base container
- 13: Outlet socket of container 11
- 14: Outlet opening of container 11
- 15: Outlet socket of container 12
- 16: Outlet opening of container 12
- 17: Housing
- 18: First connecting socket
- 19: Second connecting socket
- 20: Mixing chamber
- 21: Inlet opening of first connecting socket 18
- 22: Inlet opening of second connecting socket 19
- 23: Baseplate
- 24: Narrow portion
- 25: Mixing rotor
- 26: Front disk
- 27: Back disk
- 28: Distance piece
- 29: Delay chamber
- 30: Hole in front disk 26
- 31: Hole in back disk 27
- 32: Hole in front disk 26
- 33: End walls
- DImc: Diameter of inlet opening 21
- Dmc: Diameter of narrow portion 24
- Amc: Minimal cross-sectional area of first flow path
- DImb: Diameter of inlet opening 22
- Amb: Minimal cross-sectional area of second flow path
- DOcc: Diameter of outlet opening 14
- Acc: Minimal cross-sectional area of third flow path
- DOcb: Diameter of outlet opening 16
- Acb: Minimal cross-sectional area of fourth flow path
- Aoc: Minimal cross-sectional area of first overall flow path
- Aob: Minimal cross-sectional area of second overall flow path

## Claims

1. Dynamic mixer for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
wherein:
- the first flow path has a minimal cross-sectional area (Amc) of above 4,0 mm²;
- the second flow path has a minimal cross-sectional area (Amb) greater than the minimal cross-sectional area (Amc) of the first flow path.

2. Dynamic mixer (10) for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
wherein:
- the minimal cross-sectional areas (Amb, Amc) of the second flow path and the first flow path are in the ratio of above 1:1 and below 9,3:1.

3. Combination of a first container (11) for containing a first paste and a second container (12) for containing a second paste to be mixed with the first paste, the first container (11) comprising:
- an outlet socket (13) with an outlet opening (14) for the first paste;
- a third flow path extending through the outlet socket (13) to the outlet opening;
the second container (12) comprising:
- an outlet socket (15) with an outlet opening (16) for the second paste;
- a fourth flow path extending through the outlet socket (15) to the outlet opening;
the containers (11,12) being designed for connection with a dynamic mixer (10) for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
wherein:
- the third flow path has a minimal cross-sectional area (Acc) of above 3,8 mm²;
- the fourth flow path has a minimal cross-sectional area (Acb) greater than the minimal cross-sectional area of the third flow path (Acc).

4. Combination of a first container (11) for containing a first paste and a second container (12) for containing a second paste to be mixed with the first paste, the first container (11) comprising:
- an outlet socket (13) with an outlet opening (14) for the first paste;
- a third flow path extending through the outlet socket (13) to the outlet opening;
the second container (12) comprising:
- an outlet socket (15) with an outlet opening (16) for the second paste;
- a fourth flow path extending through the outlet socket (15) to the outlet opening;
the containers (11,12) being designed for connection with a dynamic mixer (10) for mixing the first and second pastes to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
wherein:
- the minimal cross-sectional areas (Acb, Acc) of the fourth flow path and the third flow path are in the ratio of above 1:1 and below 14,9:1.

5. Dynamic mixer (10) for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the mixer (10) being designed for connection with a first container (11) containing the first paste and a second container (12) containing the second paste, the first container (11) comprising:
- an outlet socket (13) with an outlet opening (14) for the first paste;
- a third flow path extending through the outlet socket (13) to the outlet opening;
the second container (12) comprising:
- an outlet socket (15) with an outlet opening (16) for the second paste;
- a fourth flow path extending through the outlet socket (15) to the outlet opening;
wherein:
- a first overall flow path extends from the first container (11) to the mixing chamber (20), when the first container (11) is connected to the mixer (10);
- a second overall flow path extends from the second container (12) to the mixing chamber (20), when the second container (12) is connected to the mixer (10);
- the first overall flow path has a minimal cross-sectional area (Aoc) of above 1,8 mm²;
- the second overall flow path has a minimal cross-sectional area (Aob) greater than the minimal cross-sectional area (Aoc) of the first overall flow path.

6. Dynamic mixer (10) for mixing at least a first paste and a second paste to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the mixer (10) being designed for connection with a first container (11) containing the first paste and a second container (12) containing the second paste, the first container (11) comprising:
- an outlet socket (13) with an outlet opening (14) for the first paste;
- a third flow path extending through the outlet socket (13) to the outlet opening;
the second container (12) comprising:
- an outlet socket (15) with an outlet opening (16) for the second paste;
- a fourth flow path extending through the outlet socket (15) to the outlet opening;
wherein:
- a first overall flow path extends from the first container (11) to the mixing chamber (20), when the first container (11) is connected to the mixer (10);
- a second overall flow path extends from the second container (12) to the mixing chamber (20), when the second container (12) is connected to the mixer (10);
- the minimal cross-sectional areas (Aob, Aoc) of the second overall flow path and the first overall flow path are in the ratio of above 1:1 and below 20,6:1.

7. Container (11) for containing a first paste to be mixed with a second paste, the container (11) comprising:
- an outlet socket (13) with an outlet opening (14) for the first paste;
- a third flow path extending through the outlet socket (13) to the outlet opening;
the container (11) being designed for connection with a dynamic mixer (10) for mixing the first and second pastes to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the mixer (10) being designed for connection with a second container (12) containing the second paste, the second container (12) comprising:
- an outlet socket (15) with an outlet opening (16) for the second paste;
- a fourth flow path extending through the outlet socket (15) to the outlet opening (16);
wherein:
- a first overall flow path extends from the first container (11) to the mixing chamber (20), when the first container (11) is connected to the mixer (10);
- a second overall flow path extends from the second container (12) to the mixing chamber (20), when the second container (12) is connected to the mixer (10);
- the first overall flow path has a minimal cross-sectional area (Aoc) of above 1,8 mm²;
- the second overall flow path has a minimal cross-sectional area (Aob) greater than the minimal cross-sectional area (Aoc) of the first overall flow path.

8. Container (11) for containing a first paste to be mixed with a second paste, the container (11) comprising:
- an outlet socket (13) with an outlet opening (14) for the first paste;
- a third flow path extending through the outlet socket (13) to the outlet opening (14);
the container (11) being designed for connection with a dynamic mixer (10) for mixing the first and second pastes to produce a dental substance, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the mixer (10) being designed for connection with a second container (12) containing the second paste, the second container (12) comprising:
- an outlet socket (15) with an outlet opening (16) for the second paste;
- a fourth flow path extending through the outlet socket (15) to the outlet opening (16);
wherein:
- a first overall flow path extends from the first container (11) to the mixing chamber (20), when the first container (11) is connected to the mixer (10);
- a second overall flow path extends from the second container (12) to the mixing chamber (20), when the second container (12) is connected to the mixer (10);
- the minimal cross-sectional areas (Aob, Aoc) of the second overall flow path and the first overall flow path are in the ratio of above 1:1 and below 20,6:1.

9. Combination of a dynamic mixer (10), a first container (11) for containing a first paste, and a second container (12) for containing a second paste to be mixed with the first paste, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the first container (11) comprising:
- an outlet socket (13) with an outlet opening (14) for the first paste;
- a third flow path extending through the outlet socket (13) to the outlet opening (14), the outlet socket (13) being connected with the mixer (10) so as to form a first overall flow path that extends from the first container (11) to the mixing chamber (20);
the second container (12) comprising:
- an outlet socket (15) with an outlet opening (16) for the second paste;
- a fourth flow path extending through the outlet socket (15) to the outlet opening (16), the outlet socket (15) being connected with the mixer (10) so as to form a second overall flow path that extends from the second container (12) to the mixing chamber (20);
wherein:
- the first overall flow path has a minimal cross-sectional area (Aoc) of above 1, 8 mm²;
- the second overall flow path has a minimal cross-sectional area (Aob) greater than the minimal cross-sectional area (Aoc) of the first overall flow path.

10. Combination of a dynamic mixer (10), a first container (11) for containing a first paste, and a second container (12) for containing a second paste to be mixed with the first paste, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the first container (11) comprising:
- an outlet socket (13) with an outlet opening (14) for the first paste;
- a third flow path extending through the outlet socket (13) to the outlet opening (14), the outlet socket (13) being connected with the mixer (10) so as to form a first overall flow path that extends from the first container (11) to the mixing chamber (20);
the second container (12) comprising:
- an outlet socket (15) with an outlet opening (16) for the second paste;
- a fourth flow path extending through the outlet socket (15) to the outlet opening (16), the outlet socket (15) being connected with the mixer (10) so as to form a second overall flow path that extends from the second container (12) to the mixing chamber (20);
wherein:
- the minimal cross-sectional areas (Aob, Aoc) of the second overall flow path and the first overall flow path are in the ratio of above 1:1 and below 20,6:1.

11. Kit comprising at least one dynamic mixer (10), at least one first container (11) containing a first paste, and at least one second container (12) containing a second paste to be mixed with the first paste, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the first container (11) comprising:
- an outlet socket (13) with an outlet opening (14) for the first paste;
- a third flow path extending through the outlet socket (13) to the outlet opening (14), the outlet socket (13) being connected with the mixer (10) so as to form a first overall flow path that extends from the first container (11) to the mixing chamber (20);
the second container (12) comprising:
- an outlet socket (15) with an outlet opening (16) for the second paste;
- a fourth flow path extending through the outlet socket (15) to the outlet opening (16), the outlet socket (15) being connected with the mixer (10) so as to form a second overall flow path that extends from the second container (12) to the mixing chamber (20);
wherein:
- the first overall flow path has a minimal cross-sectional area (Aoc) of above 1,8 mm²;
- the second overall flow path has a minimal cross-sectional area (Aob) greater than the minimal cross-sectional area (Aoc) of the first overall flow path.

12. Kit comprising at least one dynamic mixer (10), at least one first container (11) containing a paste K, and at least one second container (12) containing a second paste to be mixed with the first paste, the mixer (10) comprising:
- a mixing chamber (20);
- an inlet opening (21) for the first paste;
- an inlet opening (22) for the second paste;
- a first flow path extending from the inlet opening (21) for the first paste to the mixing chamber (20);
- a second flow path extending from the inlet opening (22) for the first paste to the mixing chamber (20);
the first container (11) comprising:
- an outlet socket (13) with an outlet opening (14) for the first paste;
- a third flow path extending through the outlet socket (13) to the outlet opening (14), the outlet socket (13) being connected with the mixer (10) so as to form a first overall flow path that extends from the first container (11) to the mixing chamber (20);
the second container (12) comprising:
- an outlet socket (15) with an outlet opening (16) for the second paste;
- a fourth flow path extending through the outlet socket (15) to the outlet opening (16), the outlet socket (15) being connected with the mixer (10) so as to form a second overall flow path that extends from the second container (12) to the mixing chamber (20);
wherein:
- the minimal cross-sectional areas (Aob, Aoc) of the second overall flow path and the first overall flow path are in the ratio of above 1:1 and below 20,6: 1.

13. Use of a dynamic mixer (10) according to one of the preceding claims, for mixing at least a first paste and a second paste to produce a dental substance at a mixing ratio of 1:10 or above and 1:2 or below.

14. Dynamic mixer (10) or combination or container (11) according to one of the preceding claims, wherein the minimal cross-sectional area (Aoc) of the first overall flow path is located in the first flow path.

15. Dynamic mixer (10) or combination or container (11) according to one of the preceding claims, wherein the minimal cross-sectional area (Aoc) of the first overall flow path is located in the third flow path.

16. Combination or kit according to one of the preceding claims, further comprising a motor-driven dispensing apparatus for feeding the pastes out of the containers (11,12) to the mixer (10) and driving the mixer (10).

17. Container (11) or combination according to one of the preceding claims, wherein the container (11) for containing a first paste contains the first paste.

18. Combination according to one of the preceding claims, wherein the container (12) for containing a second paste contains the second paste.

19. Container (11) or combination according to one of the preceding claims, further comprising at least one dynamic mixer (10) according to one of the preceding claims.

20. A package containing two or more dynamic mixers (10) according to one of the preceding claims.
